# EUROPÄISCHE PATENTSCHRIFT

(11) **EP 0 570 029 B1**
(45) Veröffentlichungstag und Bekanntmachung des Hinweises auf die Patenterteilung: **11.06.1997**
(21) Anmeldenummer: 93112687.4
(22) Anmeldetag: 28.03.1990
(51) Int. Cl.: B60S 1/04

(54) **Scheibenwischeranlage**
Windshield wiper arrangement
Dispositif d'essuie-glace

(30) Priorität: 29.03.1989 AT 717/89
(43) Veröffentlichungstag der Anmeldung: 18.11.1993
(62) Teilanmeldung aus: 90905163.3
(73) Patentinhaber: BATTLOGG, Stefan, A-6771 St. Anton im Montafon (AT)
(72) Erfinder: BATTLOGG, Stefan, A-6771 St. Anton im Montafon (AT)
(74) Vertreter: Hofinger, Engelbert, DDr.

(56) Entgegenhaltungen:
- DE-A- 3 315 126
- US-A- 2 607 065
- US-A- 2 624 904
- US-A- 2 790 195
- US-A- 3 688 334
- US-A- 4 447 928

## Beschreibung

Die Erfindung betrifft eine Scheibenwischeranlage, insbesondere für Personenkraftwagen, mit einem um eine Schwenkachse schwenkbaren Wischerarm, der ein Lagergehäuse und am freien Endteil ein Drehlager für ein im wesentlichen parallel zu den Seitenrändern der Scheibe über die Scheibe führbares Wischerblatt aufweist, das sowohl in einer mittleren Arbeitsstellung als auch in einer in den Bereich des unteren Scheibenrandes verschwenkten Ruhestellung annähernd parallel zum Wischerarm liegt, mit einem Schwenkantrieb für den Wischerarm, mit einem im Lagergehäuse angeordneten Steuergetriebe für den Drehantrieb des Wischerblattes während der Parallelführung, wobei das Steuergetriebe ein während der Parallelführung fahrzeugfest angeordnetes Steuerelement sowie ein mit dem Wischerarm schwenkendes Abtastelement aufweist, und mit einer Einrichtung zum Wechsel zwischen paralleler und schwenkender Führung des Wischerblattes, die einen Stellantrieb aufweist, mittels dem das Steuerelement in der mittleren Arbeitsstellung aus der fahrzeugfesten Anordnung in eine wischerarmfeste Anordnung überführbar ist, in der das Steuergetriebe außer Funktion gesetzt, der Drehantrieb des Wischerblattes arretiert und der Schwenkwinkel des Wischerarmes verändert ist.

Eine derartige Scheibenwischeranlage ist beispielsweise der US-A 3,688,334 zu entnehmen. Die Umschaltung des Steuerelementes erfolgt bei diesem Scheibenwischer dadurch, daß ein mittels des Stellantriebes verschiebbarer Riegel einen Mitnehmer entweder mit einem fahrzeugfesten Teil oder mit einem beweglichen Teil verbindet, der ein Lagergehäuse des Steuergetriebes bildet und an dem der Schwenkantrieb angreift. Die Schwenkachse des Wischerarmes liegt parallel zu einer Lagerachse auf dem um die Lagerachse verschwenkbaren Lagergehäuse. Das Steuergetriebe umfaßt vier Zahnräder, die paarweise mittels zweier Zahnriemen verbunden sind. Solange der Mitnehmer, die Lagerachse und die darauf angeordneten Zahnräder fahrzeugfest gehalten sind, verschwenkt der Wischerarm entgegengesetzt zum Lagergehäuse, wobei sein Schwenkwinkel aufgrund einer Übersetzung im Getriebebereich größer als der Schwenkwinkel des Lagergehäuses ist. Die Schwenkachse des Wischerarmes wandert dabei entlang eines Kreisbogens zuerst nach unten und dann wieder nach oben, sodaß das Drehlager bei der Bewegung über die Scheibe einer nur geringfügig gebogenen bzw. annähernd geraden Linie folgt. Wird der Mitnehmer wischerarmfest fixiert, entspricht der Schwenkwinkel des Wischerarmes dem des Lagergehäuses und der Wischerarm schwenkt mit diesem in die Ruhestellung mit.

Die US-A-2,607,065 zeigt einen Scheibenwischer mit einem zweiteiligen, längenveränderbaren Wischerarm, in dem ein Stellantrieb einen Bowdenzug enthält, über den ein Hebel verschwenkt wird, der eine Feder vorspannt. Der Schwenkantrieb wird stillgesetzt, wenn eine mittlere Arbeitsstellung erreicht ist, in der die gespannte Feder den vorderen Teil des Wischerarmes um ein Gelenk in die Parkstellung verschwenkt, das in dieser Stellung in der Schwenkachse liegt. Das Verschieben in die Parkstellung spannt eine gegenwirkende Feder, sodaß beim Einschalten nach Verschwenken des Hebels vor dem Einsetzen des Schwenkantriebes der vordere Teil des Wischerarmes in die mittlere Arbeitsstellung schwenken soll. Das Steuergetriebe enthält für beide Betriebsarten je ein fahrzeugfestes Steuerelement.

Der US-A-2,790,195 ist eine Scheibenwischeranlage zu entnehmen, deren Wischerarm zwei federbeaufschlagte Zahnstangen enthält, die gemeinsam in ein Zahnrad eingreifen, an dem das Wischerblatt angeordnet ist, und das am freien Wischerarmende in einem Längsschlitz verschieblich ist. Die beiden Zahnstangen gleiten während der Wischerbewegung des Wischerarmes entlang zwei unterschiedlichen Steuerkurven, die jeweils ein flaches V bilden, und an einem fahrzeugfesten Steuerelement angeordnet sind. Dabei werden die beiden Zahnstangen so verschoben, daß das Wischerblatt sich dreht und den Wischerarmhub durch seine Bewegung im Längsschlitz ausgleicht, sodaß es etwa parallel geführt wird. Die Steuerkurven setzen sich im Anschluß an die V-Form gemeinsam vertikal nach unten fort, sodaß bei der Überführung in die Ruhestellung die Zahnstangen so verschoben werden, daß die zum unteren Scheibenrand parallele Lage des Wischerblattes erreicht wird. Da dieser Scheibenwischer sich zur Überführung in die Ruhestellung über den Wischerschwenkbereich hinaus bewegen muß, läßt sich eine parallele Führung über die gesamte Scheibenbreite nicht erzielen. Es verbleibt somit entweder außen oder, bei zwei Wischerarmen, mittig ein nicht überstrichener Bereich.

Ein weiteres parallel geführtes Wischerblatt ist beispielsweise aus der DE-A-36 41 551 bekannt. Das Wischerblatt ist dort an zwei schwenkenden Wischerarmen angelenkt, deren sogenannte wirksame Längen sich während der Schwenkbewegung so verändern, daß das Wischerblatt ein im wesentlichen rechteckiges Feld überstreicht. In einer Ausführung wird dabei die Längenänderung des Wischerarmes durch ein mit dem Schwenkantrieb gekoppeltes Kurbelgetriebe bewirkt, das den Wischerarm in einer mitschwenkenden Führung aus und einschiebt. In Ruhestellung liegt das Wischerblatt seitlich entlang des Scheibenrahmens, wobei sich zwangsläufig der Wischerarm schräg nach außen über eine untere Ecke der Scheibe erstreckt. Eine Überführung des Wischerarmes samt Wischerblatt in eine Ruhestellung am unteren Rand der Scheibe, bzw. unterhalb der Scheibe ist nicht möglich.

Die Erfindung hat es sich nun zur Aufgabe gestellt, bei einer Scheibenwischeranlage, deren Wischerblatt parallel über die gesamte Scheibe geführt und etwa parallel zum Wischerarm mit diesem an den unteren Scheibenrand verschwenkt werden kann, eine Längenveränderung des Wischerarmes mittels einer möglichst einfachen Steuerung zu erzielen.

Erfindungsgemäß wird dies dadurch erreicht, daß der Wischerarm einen mit dem Lagergehäuse verbundenen ersten Teil und einen zweiten Teil aufweist, an dem das Drehlager für das Wischerblatt vorgesehen ist und der während der Parallelführung des Wischerblattes im ersten Teil teleskopisch derart verschiebbar ist, daß das Drehlager für das Wischerblatt sich im wesentlichen parallel zum unteren Rand der Scheibe bewegt und daß die Verschiebung des zweiten Teiles ebenfalls von dem den Drehantrieb des Wischerblattes steuernden Steuergetriebe gesteuert und in der wischerarmfesten Anordnung des Steuerelementes blockiert ist.

Mittels des Stellantriebes wird der Wischerarm somit aus jener etwa mittleren Arbeitsstellung, in der der Wischerarm seine kürzeste Länge aufweist, und das Wischerblatt mit dem Wischerarm annähernd fluchtet, in die etwa horizontale Lage der Ruhestellung entlang des unteren Scheibenrandes verschwenkt. Die Arretierung des Antriebs verhindert dabei ebenso die Verschiebung der Wischerarmteile wie die zufällige Verdrehung des Wischerblattes aufgrund von Reibungsänderungen zwischen dem Wischerblattgummi und der Windschutzscheibe. Wird der Scheibenwischer benötigt, so wird über den Stellantrieb der Wischerarm in die etwa mittlere Ausgangs-Arbeitsstellung zurückgeschwenkt, und die Betriebsart gewechselt, wobei das Steuergetriebe wieder aktiviert wird, und der Verschiebeantrieb für den zweiten Wischerarmteil sowie der Drehantrieb für das Wischerblatt freigegeben werden.

Eine bevorzugte Ausführung des Steuergetriebes sieht vor, daß im Steuerelement ein von der Verschiebekraft des zweiten Teiles beaufschlagter Steuerstift verschiebbar gelagert ist und das Abtastelement durch eine im Lagergehäuse ausgebildete Steuerkurve ausgebildet ist, die am Steuerstift anliegt. Das Anlageende des Steuerstiftes ist dabei bevorzugt mit einer reibungsvermindernden Rolle versehen. Der Steuerstift ist im Steuerelement in seiner gesamten Länge geführt, wobei die Rolle an einem aus der Führung hochstehenden Teil angeordnet ist und das Abtastelement das Steuerelement teilweise überdeckt. Die Elemente des Steuergetriebes können aber auch vertauscht sein.

Eine weitere bevorzugte Ausführung sieht vor, daß die teleskopisch angeordneten Teile des Wischerarmes gegen die Kraft einer Schraubenfeder einziehbar sind. Hiezu umfaßt die Parallelführung des Wischerblattes bevorzugt einen Seilzug, der mit einer das Wischerblatt tragenden Drehscheibe verbunden, und auf zwei insbesondere federbeaufschlagte Seilspulen ausziehbar aufgewickelt ist, die am Steuerelement über eine Verzahnung gegenläufig drehbar gelagert sind. Die Schraubenfeder beaufschlagt somit den Wischerarm ständig im Sinne einer Verlängerung, der durch die sich abspulenden Seillängen Rechnung getragen wird, wenn der Steuerstift mit einer Verzahnung versehen ist, die in ein die Seilspulen beim Verschwenken des Wischerarmes gegenläufig drehendes Getriebe eingreift. Die Schraubenfeder beaufschlagt damit indirekt auch den Steuerstift. Bei der Rückschwenkung erfolgt ein gegensätzlicher Bewegungsablauf. Die Steuerkurve verschiebt den Steuerstift, der über seine Verzahnung die Seilspulen entgegengesetzt antreibt, sodaß die beiden Seile eingezogen werden, wobei der Wischerarm gegen die Schraubenfeder verkürzt wird. Den Seilspulen kann eine Spiralfeder zugeordnet sein, wobei für die entgegengesetzt wirkende Schraubenfeder eine geringfügig größere Federkraft gewählt wird. Dadurch sind im Ruhezustand sowohl der Steuerstift als auch die in seine Verzahnung eingreifenden Ritzel nahezu unbelastet und es werden im Betriebszustand Belastungsspitzen vermieden. Diese Ausführung enthält keine wesentlich platzraubenden Bauteile, sodaß der Einbau der Scheibenwischeranlage in jedem Personenkraftwagen möglich ist. Der Platzbedarf für die erfindungsgemäße Scheibenwischeranlage übersteigt nicht den für herkömmliche, einfache Scheibenwischer.

Statt über die Schraubenfeder könnten die teleskopisch verschiebbaren Teile auch über einen weiteren Seilzug oder über eine Verzahnung bewegbar sein. Auch die beschriebene Parallelführung über einen Seilzug stellt nur eine von mehreren möglichen Ausbildungen dar. Anstelle eines Seilzuges und zweier sich gegenläufig drehender Seilspulen wären auch andere Getriebeformen denkbar, beispielsweise ein kegelverzahntes Abrollelement, das mit einer kegelverzahnten längenveränderbaren Welle eine kegelverzahnte Drehscheibe des Wischerblattes verbindet, wobei ebenfalls eine Feder Verwendung findet.

Die Schraubenfeder kann an dem an das Lagergehäuse anschließenden ersten Teil und an dem die Drehscheibe lagern-den zweiten Teil des Wischerarmes fixiert und von einem Faltenbalg umgeben ist. Durch den Faltenbalg werden der Wischerarm bzw. alle beweglichen Teile nach außen abgeschirmt und ein ansprechendes Aussehen erzielt, wobei eine Schmierung aller beweglichen Teile im Wischerarm erzielbar ist, wenn der Faltenbalg mit einem Schmiermittel, beispielsweise Fett gefüllt wird.

Liegen die beiden Seilspulen koaxial, so können sie einen relativ großen Durchmesser aufweisen, wodurch sich eine zusätzliche Untersetzung zwischen dem Steuerstift und der Seilspule erübrigt. Um eine exakte Parallelführung zu erzielen, müßte die Drehscheibe für das Wischerblatt denselben großen Durchmesser aufweisen. Da das Drehlager des Wischerarmes und die Wischerblatthalterung möglichst schmal gehalten werden müssen, ist in einer weiteren Ausführung vorgesehen, daß die Drehscheibe des Wischerblattes eine Verzahnung aufweist, in die eine vom Seilzug getriebene Antriebsschnecke eingreift, deren Stillstand die Verdrehung des Wischerblattes sperrt. Durch die Verwendung einer Schnecke für den Antrieb der Drehscheibe wird hier die Untersetzung erzielt, sodaß die Seilspulen den gewünschten größeren Durchmesser aufweisen können. Anstelle der Antriebsschnecke könnte auch anderes geignetes Untersetzungsgetriebe vorgesehen werden. Der Antriebsschnecke kann eine Seilscheibe zugeordnet sein, über die der Seilzug geführt ist, wobei auch ein Formschluß zwischen Seil und Seilscheibe ausgebildet werden kann, beispielsweise durch Verdickungen des Seils und Ausnehmungen der Seilscheibe. Bevorzugt wird eine Ausführung gewählt, in der die Antriebsschnecke mit einer Seiltrommel verbunden ist, auf der die Seile des Seilzuges gegenläufig aufgewickelt sind.

Da Windschutzscheiben insbesondere bei Personenkraftwagen nicht rechteckig, sondern oft trapezförmig sind, bewirkt eine exakte Parallelführung des Wischerblattes keine vollflächige Erfassung der Scheibe von Seitenrand zu Seitenrand bzw. innerhalb des gewünschten Wischbereiches. Mittels unterschiedlicher Durchmesser bzw. wählbarer Untersetzungen zwischen Antriebsschnecke und Drehscheibe läßt sich auch eine angepaßte trapezförmige Wischfläche erzielen, wobei das Wischerblatt sich in bezug auf den Wischerarm um einen gegenüber dem Schwenkwinkel vergrößerten Drehwinkel verdreht. Durch entsprechende Ausbildung der Steuerkurve kann die Wischfläche auch einem gebogenen Längsrand der Scheibe angepaßt werden.

Das Verschwenken in die Ruhestellung erfolgt insbesondere über einen unterschiedlichen Schwenkwinkel. Wenn der Schwenkantrieb fahrzeugfest und mit Abstand zur Schwenkachse an einem Gelenkbolzen des Lagergehäuses angreift, das um eine zur Schwenkachse parallel Lagerachse schwenkbar ist, wird in einer bevorzugten Ausführung ein Untersetzungswechsel im Steuergetriebe dadurch unnötig, daß die Schwenkachse des Wischerarmes auf dem Steuerelement angeordnet ist, und daß der Abstand des Gelenkbolzens zur Lagerachse kleiner als der Abstand des Gelenkbolzens zur Schwenkachse ist.

Wenn der Stellantrieb eine Verriegelungseinrichtung beaufschlagt, die einen in eine Öffnung eines fahrzeugfesten Bauteiles oder eine Öffnung des Lagergehäuses eingeschobenen Sperrstift aufweist, wobei der Sperrstift während der Parallelführung dem fahrzeugfesten Steuerelement zugeordnet ist, so ist bevorzugt vorgesehen, daß der Sperrstift parallel zur Schwenkachse bzw. zur Lagerachse verschiebbar ist.

Alternativ kann bei einer vom Stellantrieb beaufschlagten Verriegelungseinrichtung auch vorgesehen sein, daß der Stellantrieb auf dem Lagergehäuse angeordnet ist und die Verriegelungseinrichtung zwei senkrecht zur Lagerachse verschiebbare Sperrstifte umfaßt, deren erster in der Lagerachse federbeaufschlagt angeordnet ist und deren zweiter im Lagergehäuse verschiebbar ist, wobei das Steuerelement eine Durchbrechung aufweist, in die die beiden Sperrstifte wechselweise eingreifen. Als Stellantrieb kann in diesen beiden Ausführungen beispielsweise ein Hubmagnet Verwendung finden, der den einzigen Sperrstift bzw. den zweiten Sperrstift beaufschlagt.

In der Ausführung mit zwei Sperrstiften kann der zweite Sperrstift einen aus dem Lagergehäuse vorstehenden Gelenkbolzen aufweisen, an dem der Schwenkantrieb angelenkt ist. Hier kann als Stellantrieb vorteilhaft auch ein beispielsweise eine Antriebsschnecke aufweisender Elektromotor eingesetzt werden, sodaß die Verschiebelänge des im Lagergehäuse angeordneten Sperrstiftes stufenlos eingestellt werden kann, wodurch eine Verschiebung des Angriffspunktes des Schwenkantriebes erzielt werden kann. Dies führt zu einer Veränderung des Wischwinkels, der sich mit zunehmendem Abstand des Angriffspunktes des Schwenkantriebes von der Schwenkachse verkleinert.

Nachstehend wird nun die Erfindung an Hand der Figuren beiliegender Zeichnungen näher beschrieben, ohne darauf beschränkt zu sein.

Es zeigen:
Fig. 1 bis 3 Draufsichten auf Windschutzscheiben von Kraftfahrzeugen mit erfindungsgemäßen Scheibenwischeranlagen, wobei der Wischerarm jeweils in mehreren Positionen gezeigt ist,
Fig. 4 bis 11 Details einer ersten Ausführung einer Scheibenwischeranlage, wobei Fig. 4 einen Längsschnitt nach der Linie IV-IV von Fig. 5, Fig. 5 eine teilgeschnittene Draufsicht, Fig. 6 vergrößert den Lagerbereich des Wischerarmes im Längsschnitt nach der Linie VI-VI von Fig. 8, Fig. 7 einen Schnitt nach der Linie VII-VII von Fig. 8, Fig. 8 vergrößert den Lagerbereich des Wischerarmes im Schnitt gemäß Fig. 5, Fig. 9 einen Schnitt nach der Linie IX-IX von Fig. 4, Fig. 10 einen Schnitt nach der Linie X-X von Fig. 5 und Fig. 11 einen Schnitt nach der Linie XI-XI von Fig. 6 darstellt,

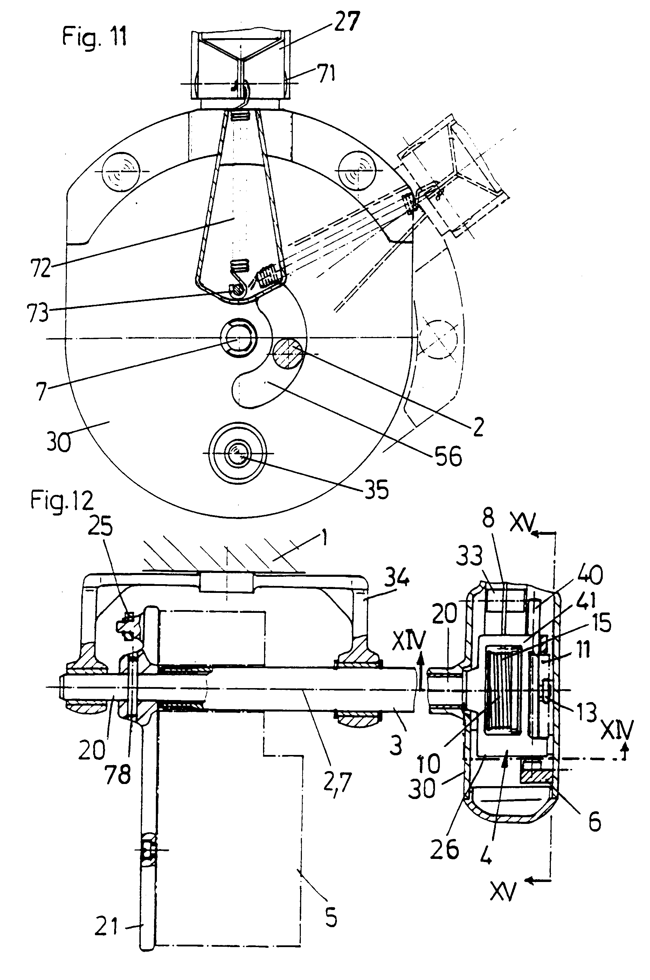

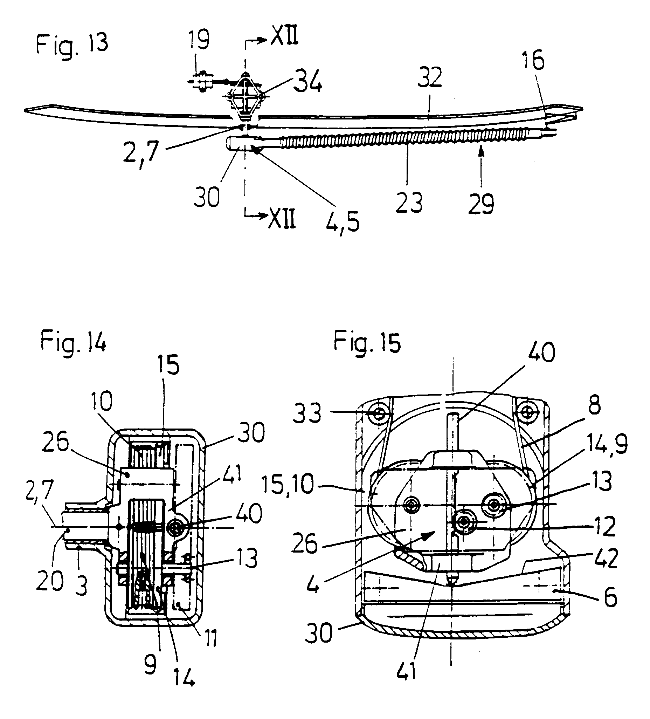

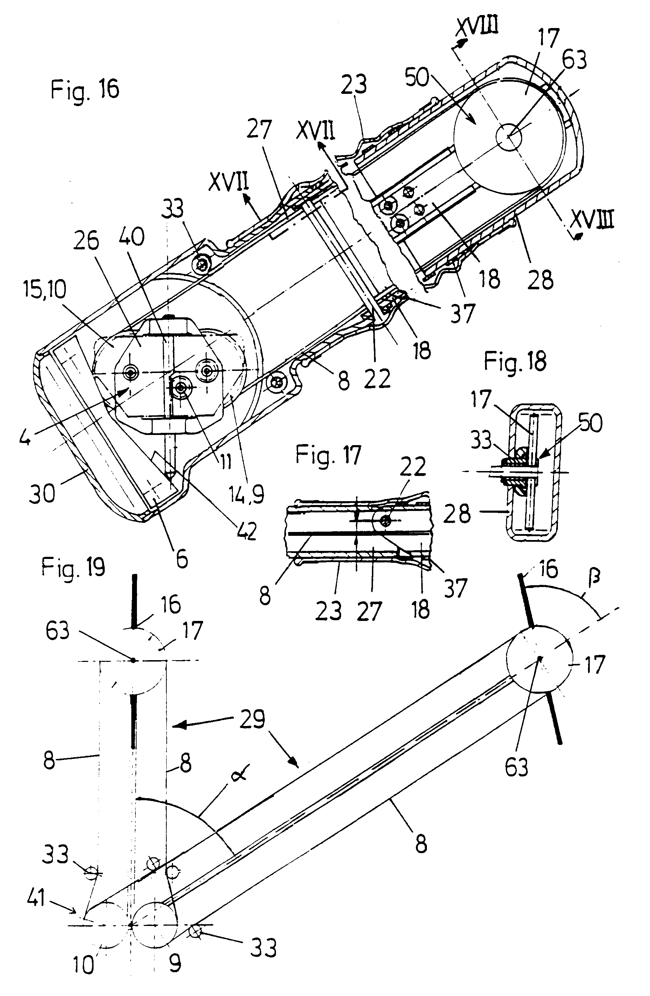

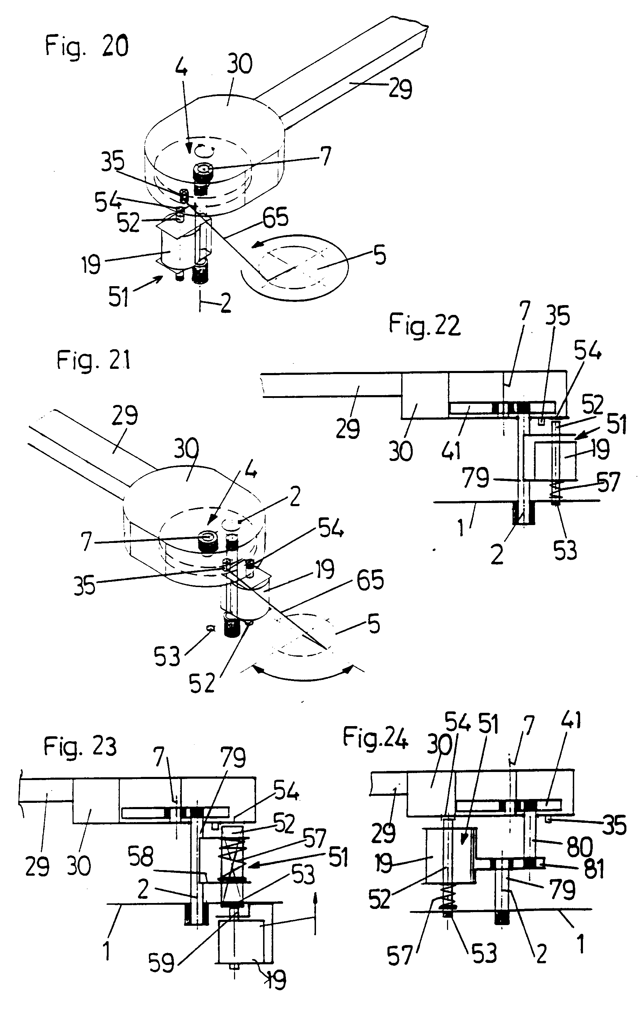

Fig. 12 bis 19 Details einer zweiten Ausführung einer Scheibenwischeranlage, wobei Fig. 12 einen vergrößerten Schnitt nach der Linie XII-XII der Fig. 13, Fig. 13 einen schematischen Horizontalschnitt, Fig. 14 einen Schnitt nach der Linie XIV-XIV von Fig. 12, Fig. 15 einen Schnitt nach der Linie XV-XV von Fig. 12 in der mittleren Arbeitsstellung des Wischerarmes, Fig. 16 denselben Schnitt in einer seitlichen Umkehrstellung des Wischerarmes, Fig. 17 und 18 Schnitte nach den Linien XVII-XVII und XVIII-XVIII in Fig. 16 und Fig. 19 eine schematische Darstellung von Wischerarm und Wischerblatt in der mittleren Arbeitsstellung und einer seitlichen Umkehrstellung darstellen, Fig. 20 bis 22 schematisch eine Einrichtung zum Wechsel zwischen paralleler und schwenkender Führung des Wischerblattes, wobei Fig. 20 die fahrzeugfeste Anordnung und Fig. 21 die wischerarmfeste Anordnung des Steuergetriebes darstellen und Fig. 22 eine Seitenansicht der Anordnung nach Fig. 20 ist,
Fig. 23 und 24 Seitenansichten gemäß Fig. 22 einer zweiten und einer dritten Ausführung der Wechseleinrichtung,
Fig. 25 bis 28 Details einer vierten Ausführung der Wechseleinrichtung, wobei Fig. 25 und 26 Schnitte durch das Lagergehäuse nach der Linie XXV-XXV von Fig. 27 in der fahrzeugfesten Anordnung und in der wischerarmfesten Anordnung darstellen, Fig. 27 ein Schnitt nach der Linie XXVII-XXVII von Fig. 28 und Fig. 28 ein Schnitt nach der Linie XXVIII-XXVIII von Fig. 27 ist, und
Fig. 29 eine schematische Draufsicht auf eine weitere Ausführung der Wechseleinrichtung der Fig. 25 bis 28 mit einem verschiebbaren Angriffspunkt des Schwenkantriebes.

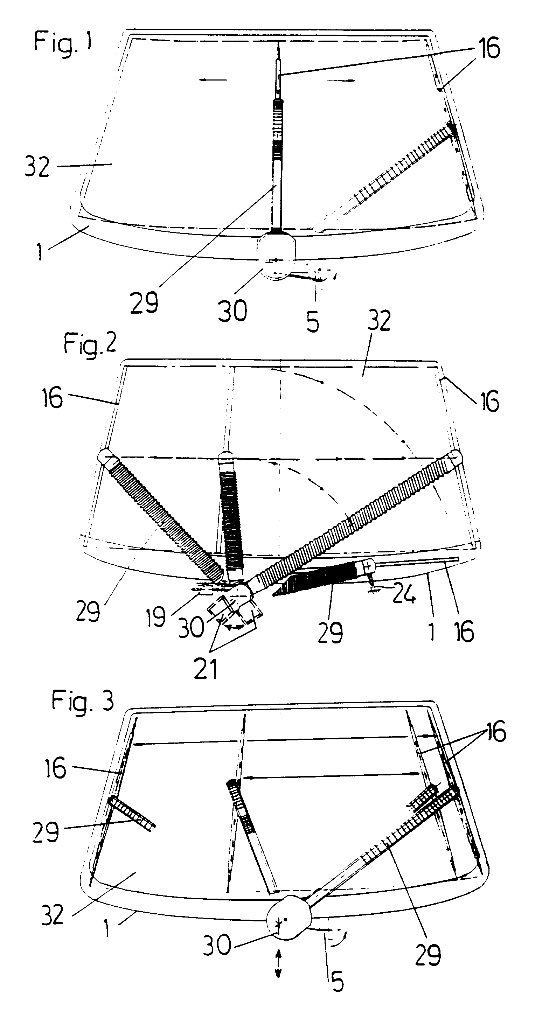

Ein Kraftfahrzeug 1 weist eine etwa trapezförmige, gewölbte und seitlich gegebenenfalls stärker rückgebogene Windschutzscheibe 32 auf, der eine Einarmscheibenwischeranlage zugeordnet ist. Diese ist mit einem in der Länge verstellbaren, ein Lagergehäuse 30 aufweisenden Wischerarm 29 versehen, der in Fig. 1 bis 3 jeweils in verschiedenen Positionen während des vom Schwenkantrieb 5 gesteuerten Bewegungsablaufes eingezeichnet ist. Am Wischerarm 29 ist ein Wischerblatt 16 drehbar gelagert. Die Scheibenwischeranlage ist am Kraftfahrzeug 1 unterhalb der Windschutzscheibe 32 angeordnet.

Fig. 1 zeigt eine mittige Anordnung der Scheibenwischeranlage, wobei sich der Wischerarm 29 in der mittleren Arbeitsstellung über die Höhe der Scheibe 32 erstreckt, in der er seine kürzeste Länge aufweist, und in der das annähernd parallel geführte Wischerblatt 16 mit dem Wischerarm 29 fluchtet. Beim Verschwenken des längenveränderlichen Wischerarmes 29 überstreicht das Wischerblatt 16 die strichliert umrandete Fläche, wobei es zu einer geringfügigen Drehung des Wischerblattes 16 kommt, sodaß es in der Endstellung sich entlang der Scheibenränder erstreckt. Der Wischerarm 29 ist aus der mittleren Arbeitsstellung in zumindest eine Ruhestellung überführbar, in der das Wischerblatt 16 ohne Verdrehung gegenüber dem Wischerarm 29 entlang des unteren Scheibenrandes liegt. Ein Schwenkantrieb 5 ist ebenfalls fahrzeugfest angeordnet.

Gemäß Fig. 2 dient eine außermittige Anordnung der Scheibenwischeranlage dazu, bei einer Windschutzscheibe 32 mit größerer Höhe die Ruhestellung zu erreichen, ohne daß das Wischerblatt 16 seitlich vorsteht. Die vollflächige Überstreichung der Scheibe 32 wird durch unterschiedliche Wischerarmverlängerungen in den beiden Randstellungen erreicht, wobei die über einen Stellantrieb 19 erreichbare Ruhestellung fahrerseitig gegeben ist. Dadurch wird beim Einschalten des Scheibenwischers bereits durch das Hochschwenken in die mittlere Arbeitsstellung der fahrerseitige Scheibenteil überstrichen.

Fig. 3 zeigt wiederum eine mittige Anordnung, in der die beiden symmetrischen Randstellungen des Normalbetriebes und die beiden asymmetrischen Randstellungen eines Betriebes bei hoher Fahrzeuggeschwindigkeit und starkem Regen gezeigt sind, in dem das Wischfeld durch Verlegung des Angriffspunktes des Schwenkantriebes 5 verkleinert ist.

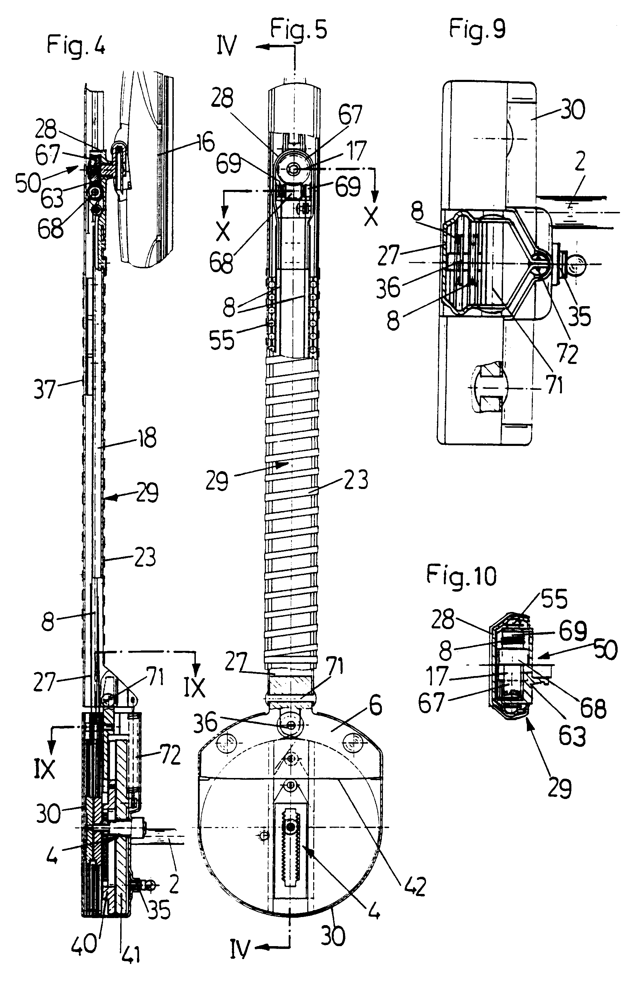

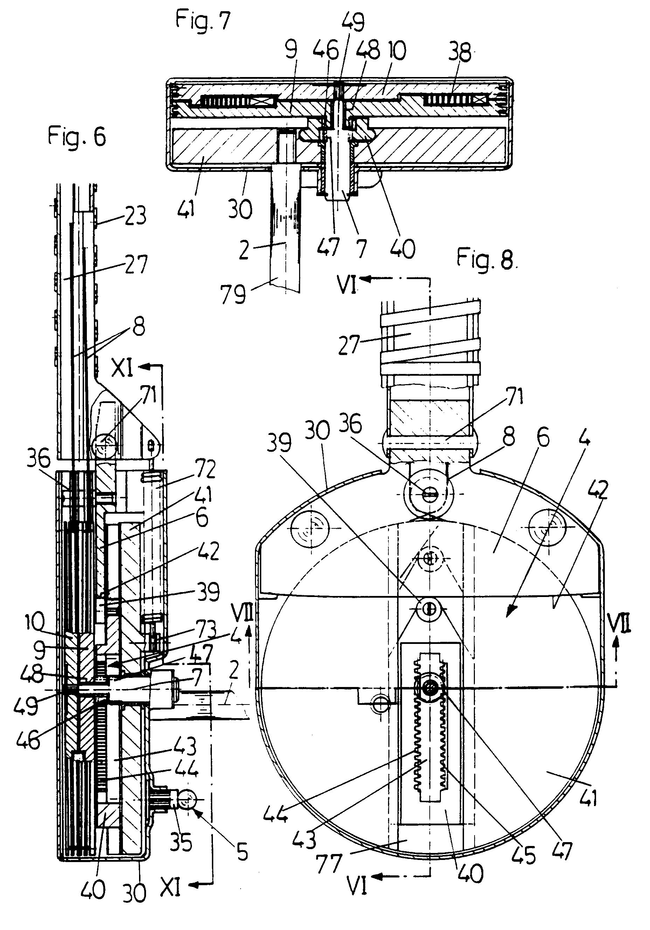

Konstruktive Details zweier Ausführungsbeispiele erfindungsgemäßer Scheibenwischer zeigen die Fig. 4 bis 19. In der ersten Ausführung nach der Fig. 4 bis 11, die beispielsweise gemäß Fig. 1 am Kraftfahrzeug 1 angeordnet ist, ist das Lagergehäuse 30 um eine fahrzeugfeste Lagerachse 2 schwenkbar angeordnet und weist einen Gelenkbolzen 35 auf, an dem ein Lenker 65 (Fig.20) des ebenfalls fahrzeugfesten Schwenkantriebes 5 angreift. Die Lagerachse 2 durchdringt einen kreisbogenförmigen Schlitz 56 und trägt ein plattenförmiges ebenfalls fahrzeugfestes Steuerelement 41 eines Steuergetriebes 4. Im Steuerelement 41 ist in einer Längsnut 77 ein Steuerstift 40 federbeaufschlagt verschiebbar angeordnet, der mit einer Steuerkurve 42 eines im Lagergehäuse 30 ausgebildeten Abtastelement 6 des Steuergetriebes 4 zusammenwirkt, wobei der Anlageteil an der Steuerkurve 42 durch eine Rolle 39 gebildet ist. Der Steuerstift 40 weist einen Längsschlitz 43 auf, an dessen beiden Längsseiten in verschiedenen Höhen zwei Zahnleisten 44 und 45 vorgesehen sind. Die im Lagergehäuse befestigte Schwenkachse 7 durchsetzt das Steuerelement 41 und den Längsschlitz 43 des Steuerstiftes 40 und trägt ein Ritzel 47, das in die Zahnleiste 45 eingreift, sowie eine Seilspule 10. Auf der Schwenkachse 7 ist weiters eine Hohlwelle 48 gelagert, die ein in die Zahnleiste 44 eingreifendes Ritzel 46 trägt und mit einer Seilspule 9 verbunden ist. Wird durch Verdrehen des Lagergehäuses 30 über die Steuerkurve 42 der Steuerstift 40 verschoben (Fig. 8), so werden über die beiden, in jeweils eine Zahnleiste 44,45 eingreifenden Ritzel 46,47 die beiden koaxial angeordneten Seilspulen 9, 10 gegenläufig verdreht. Die beiden Seile eines Seilzuges 8 werden dabei von den Seilspulen 9,10 auf oder abgewickelt. An den beiden Seilspulen 9,10 stützt sich eine Spiralfeder 38 ab (Fig. 7), die in zueinander weisenden Ausnehmungen der Seilspulen 9,10 angeordnet ist, und den Seilzug 8 im Sinne des Aufwickelns beaufschlagt. Der Seilzug 8 läuft über Zwei im Lagergehäuse 30 angeordnete Umlenkrollen 36, sodaß die beiden Seile mit geringem Abstand im Wischerarm 29 verlaufen. Der Wischerarm 29 besteht aus zumindest zwei Teilen 27, 28, von denen der Teil 27 am im Lagergehäuse 30 ausgebildeten Abtastelement 6 mittels einer Querachse 71 angelenkt und über eine an der Wischerblattseite angeordnete Schraubenfeder 72 mit dem Steuerelement 41 verspannt ist, sodaß der Wischerarm 29 gegen die Scheibe 32 gepreßt wird. Wie aus Fig. 11 ersichtlich, greift die Schraubenfeder 72 an einem Stift 73 des Steuerelementes 41 an, der exzentrisch zur Schwenkachse 7 angeordnet ist, sodaß die Verschwenkung des Wischerarmes 29 die Federspannung und damit den Anpreßdruck des Wischerblattes 16 erhöht.

Die Teile 27 und 28 des Wischerarmes 29 sind teleskopisch verschiebbare, gegebenenfalls in Längsrichtung gekrümmte Profile, die gegebenenfalls einen Mittelteil 18 enthalten können und zwischen denen ein oder zwei Wälzlagerkäfige 55 angeordnet sind. Der Endteil 28 des Wischerarmes 29 trägt ein Drehlager 63 für den Drehantrieb 50 des Wischerblattes 16. Im Drehlager 63 ist eine das Wischerblatt 16 tragende Drehscheibe 17 gelagert, die eine Umfangsverzahnung 67 aufweist. Diese kämmt mit einer Antriebsschnecke 68, der zwei Seiltrommeln 69 zugeordnet sind, auf denen die beiden Seile des Seilzuges 8 gegenläufig aufgewickelt fixiert sind. Für die Federbeaufschlagung des Steuerstiftes 40 ist im Wischerarm 29 eine die beiden Teile 27,28 ausschiebende Schraubenfeder 37 vorgesehen. Diese wirkt gegen die Spiralfeder 38 über die auf den Seiltrommeln 69 fixierten Seile des Seilzuges 8, die Seilspulen 9,10 und die mit diesen verbundenen Ritzeln 46,47 auf den Steuerstift 40, der an die Steuerkurve 42 angedrückt wird. Bei der Verschwenkung des Lagergehäuses 30 bewirkt die Verschiebung des Steuerstiftes 40 somit eine Längenänderung des aufgrund der Schraubenfeder 37 nach außen beaufschlagten Wischerarmes 29 mit gleichzeitiger und gleicher Längenänderung der beiden Seile des Seilzuges 8, wobei die im wesentlichen parallel führenden Seile den Drehantrieb 50 des Wischerblattes 16 bilden. Die Wahl der Untersetzung zwischen der Drehscheibe 17 und der Antriebsschnecke 68, des Durchmessers der Seilspulen 9,10 und des Durchmessers der Ritzel 46,47 bzw. der Breite des Längsschlitzes 43 bestimmen den Drehwinkel des Wischerblattes 16 in Abhängigkeit vom Schwenkwinkel des Wischerarmes 29, wobei eine Anpassung an die jeweilige Form der Windschutzscheibe 32 bzw. das gewünschte Wischfeld problemlos möglich ist. Der Wischerarm 29 ist von einem schützenden, gegebenfalls schmiermittelgefüllten Faltenbalg 23 umgeben.

In der zweiten Ausführung nach den Fig. 12 bis 19, die beispielsweise gemäß Fig. 2 am Kraftfahrzeug angeordnet ist, ist das Lagergehäuse 30, wie Fig. 12 zeigt, in einem, eine Lägerachse 2 definierenden fahrzeugfesten Montagebügel 34 schwenkbar gelagert. Der Montagebügel 34 lagert einen Achsbolzen 20, an dem ein Tragkörper 21 mittels eines Splintes 78 verdrehfest fixiert ist. Der Tragkörper 21 ist über einen Lenker 25 mit einem Stellantrieb 19 (Fig.2) verbunden, der den Tragkörper 21 zwischen den in Fig. 2 strichliert eingezeichneten Stellungen um die Lagerachse 2 verschwenkt. Auf dem Tragkörper 21 ist der Schwenkantrieb 5 angeordnet, dessen Abtrieb durch eine Hohlwelle 3 gebildet ist, die auf dem Achsbolzen 20 drehbar gelagert ist. Steht der Stellantrieb 19 still, so ist der Schwenkantrieb 5 fahrzeugfest gehalten.

Die Hohlwelle 3 und der Achsbolzen 20 ragen durch die Karosserie des Kraftfahrzeuges 1 nach außen (Fig. 13), wobei an der Hohlwelle 3 das Lagergehäuse 30 verdrehfest fixiert ist, in dem der Achsbolzen 20 endet und das Steuergetriebe 4 angeordnet ist. Auf dem Achsbolzen 20 ist ein Lagerteil 26 fixiert, in dem die beiden Seilspulen 9,10 drehbar gelagert sind, die mit kämmenden Stirnzahnrädern 14,15 versehen sind. An der Welle der Seilspule 9 und des Stirnzahnrades 14 ist ein Zahnrad 13 eines Getriebes 11 vorgesehen, das ein Ritzel 12 umfaßt, das in den eine Verzahnung aufweisenden Steuerstift 40 eingreift. Der Steuerstift 40 ist auf dem Lagerteil 26 verschiebbar angeordnet und liegt an der im Lagergehäuse 30 ausgebildeten Steuerkurve 42 des Abtastelementes 6 an. Bei stillstehendem Stellantrieb bildet somit der Lagerteil 26 samt dem Steuerstift 40, den Seilspulen 9,10 und dem Getriebe 11 das fahrzeugfeste Steuerelement 41 des Steuergetriebes 4 für den das Abtastelement 6 und die Steuerkurve 42 enthaltenden Wischerarm 29. Auf den beiden Seilspulen 9,10 sind wiederum die Enden des Seilzuges 8 aufgewickelt, der mit der im Drehlager 63 gelagerten Drehscheibe 17 verbunden ist, und aus einem durchgehenden, oder zwei einzelnen Seilen bestehen kann. Der Seilzug 8 kann an der Drehscheibe 17 befestigt sein, oder es kann auch ein Formschluß ausgebildet sein, wenn Verdickungen des Seilzuges 8 in Ausnehmungen der Drehscheibe 17 eingreifen. Die Verdrehung des Wischerblattes 16 relativ zum Wischerarm 29, erfolgt parallel, wenn der Durchmesser der Drehscheibe 17 dem Durchmesser des Steuerelementes 41 entspricht. Wie aus der Fig. 19 ersichtlich, ist der Gesamtdurchmesser des Steuerelementes 41 etwas größer als der Durchmesser der Drehscheibe 17, wobei der Seilzug 8 über die Rollen 33 geführt ist, sodaß der Drehwinkel β der Drehscheibe 17 etwas größer als der Schwenkwinkel Á aus der Mittelstellung ist. Dies führt zu einer Abweichung des Wischerblattes 16 aus seiner parallelen Lage zur Breite (Höhe) der Scheibe 32 und damit zu einer trapezförmigen Wischfläche. Eine Anpassung an unterschiedliche Windschutzscheiben 32 kann dabei sehr leicht durch Einsetzen von Drehscheiben 17 mit unterschiedlichen Durchmessern erfolgen. Gemäß Fig. 15 und 19 weist der Wischerarm 29 in einer mittleren Arbeitsstellung seine geringste Länge und ein sich etwa parallel dazu erstreckendes Wischerblatt 16 auf. Wird nun der Schwenkantrieb 5 stillgesetzt, der den Drehantrieb 50 des Wischerblattes 16 arretiert, und der Stellantrieb 19 betätigt, so kann der Wischerarm 29 einschließlich des Schwenkantriebes 5 ohne Längenänderung um die mit der Schwenkachse 7 koaxiale Lagerachse 2 aus dieser etwa mittigen Stellung in eine Ruhestellung an der Fahrerseite abgeschwenkt werden, in der er parallel zum unteren Scheibenrand liegt und gegebenenfalls in einer Ausnehmung am Kraftfahrzeug versenkt ist.

Wie aus den Fig. 16 und 18 ersichtlich, weist in dieser Ausführung der an das Lagergehäuse 30 anschließende Teil 27 des Wischerarmes 29 eine Querachse 22 auf, die außerhalb der Längsmittelebene liegt, sodaß das Wischerblatt 16 durch den von der Schraubenfeder 37 gespannten Seilzug 8 gegen die Windschutzscheibe 32 gedrückt wird. Wie in Fig. 2 eingezeichnet, kann der Wischerarm 29 in der Ruhestellung auf einem mit einer schrägen Auflauffläche versehenen Bügel 24 oder dergleichen aufliegen, sodaß das Wischerblatt 16 geschont wird.

Beim Einschalten der Scheibenwischeranlage wird zuerst der Tragkörper 21 mittels des Stellantriebes 19 aus der Ruhestellung in die Arbeitsstellung verschwenkt, wobei der fahrerseitige Teil der Scheibe 32 entsprechend einer herkömmlichen Wischeranlage im Kreisbogen überstrichen wird, und dann der Stellantrieb 19 ab und der Schwenkantrieb 5 eingeschaltet. Durch entsprechende Wahl der in Fig. 2 gezeigten asymmetrischen Anordnung unterhalb der Windschutzscheibe 32 kann der Wischerarm 29 unabhängig von Längen-Breiten-(Höhen)-verhältnis der Windschutzscheibe 32 in die Ruhestellung überführt werden und gleichzeitig auch fahrerseitig eine geringere Wischerblattgeschwindigkeit als beifahrerseitig erzielt werden. Der Stellantrieb 19 kann beispielsweise einen vom Motorunterdruck betätigten Servokolben, einen Elektromotor, einen Elektromagneten usw. umfassen.

In den Fig. 20 bis 22 ist schematisch eine für die in den Fig. 1 und 3 gezeigten Scheibenwischeranlagen mit fahrzeugfestem Schwenkantrieb 5 geeignete Einrichtung zum Wechsel zwischen einer parallelen und schwenkenden Führung dargestellt, die beispielsweise der in den Fig. 4 bis 11 näher erläuterten Ausführung zugeordnet werden kann. Das Steuerelement 41 des Steuergetriebes 4 ist auf einem die Lagerachse 2 definierenden Bolzen 79 fixiert, der in einem fahrzeugfesten Lager drehbar angeordnet ist. An diesem Bolzen 79 ist der Stellantrieb 19 fixiert, der beispielsweise als Hubmagnet ausgebildet ist und eine Verriegelungseinrichtung 51 (Fig. 22) betätigt, die in dieser Ausführung einen einzigen Sperrstift 52 aufweist. Der Sperrstift 52 ist parallel zum Bolzen 79 verschiebbar und wird durch eine Feder 57 zum Kraftfahrzeug 1 hin beaufschlagt. Fig. 20 zeigt die fahrzeugfeste Verriegelung des Steuerelementes 41, in dem das untere Ende des Sperrstifts 52 von der Feder 57 in eine Öffnung 53 des Kraftfahrzeuges 1 eingedrückt ist, sodaß das Lagergehäuse 30 um die Schwenkachse 7 verschwenkt wird. Bei Betätigung des Stellantriebes 19 wird der Sperrstift 52 aus der Öffnung 53 gelöst und in die Öffnung 54 im Lagergehäuse 30 eingeschoben (Fig. 21), sodaß eine wischerfeste Verriegelung gegeben ist. Der Schwenkantrieb 5 bewegt nun mit dem Lagergehäuse 30 auch das komplette Steuergetriebe 4, das somit außer Funktion ist, um die Lagerachse 2, wodurch das Wischerblatt 14 im Kreisbogen mitschwenkt.

Fig. 23 zeigt eine Variante in der am Bolzen 79 eine Halterung 58 für den Sperrstift 52 zugeordnet ist, der wiederum zwischen den wechselnden Eingriffen in den Öffnungen 53 und 54 mittels des Stellenantriebs 19 bewegbar ist. Der Stellantrieb 19 ist dabei fahrzeugfest angeordnet und weist einen den Sperrstift 52 aus der Fahrzeugöffnung 53 drücken-den Schieber 59 auf, wobei die Öffnung 53 bis zur Stillsetzung des Stellantriebes 19 von Schieber 59 ausgefüllt verbleibt.

Fig. 24 zeigt eine Variante, die funktionell der Ausführung nach Fig. 22 entspricht. Der Stellantrieb 19 ist an einem auf dem Bolzen 79 verschwenkbaren Querelement 81 angeordnet und der Sperrstift 52 greift wiederum wechselweise in die Öffnung 53 des Kraftfahrzeuges 1 oder die Öffnung 54 des Längsgehäuses 1 ein. Vom Querelement 81 erstreckt sich ein Verbindungsstift 80 zum Steuerelement 41, das in der gezeigten Stellung somit ebenfalls fahrzeugfest ist. Wird der Stellantrieb 19 betätigt, verriegelt der Sperrstift 52 das Querelement 81 mit dem Lagergehäuse 30, sodaß dieses einschließlich des Steuergetriebes um die Lagerachse 2 verschwenken kann. Nach dieser Ausführung sind durch wählbare Querträger verschiedene Abstände zwischen der Lagerachse 2 und der Schwenkachse 7 in einfacher Weise herstellbar, sodaß eine Anpassung an unterschiedliche Scheibenformate sehr einfach ist.

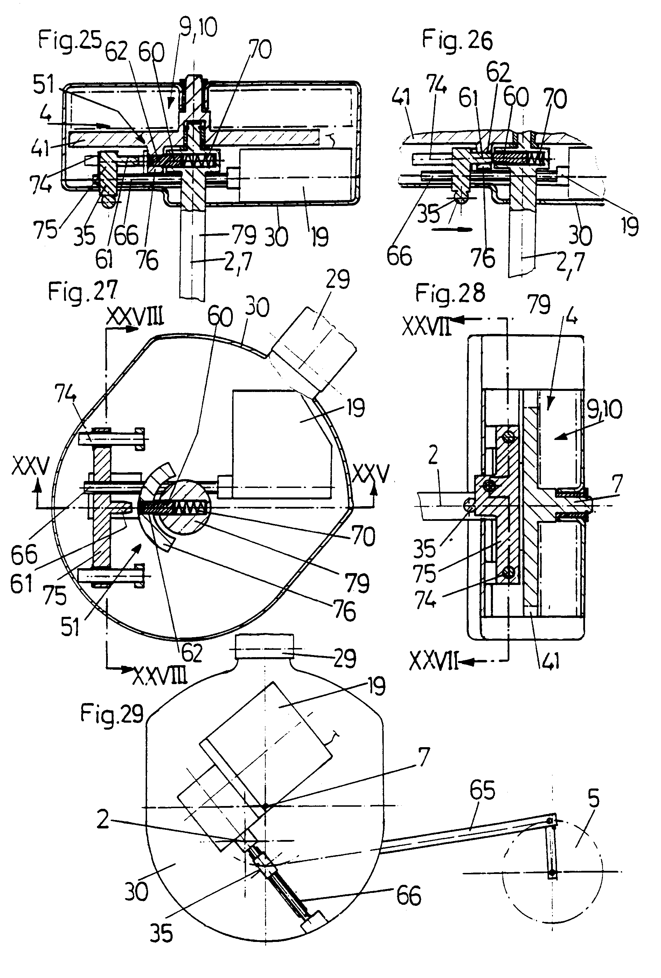

In den Fig. 25 bis 28 ist eine weitere Ausführung einer Wechseleinrichtung bei fahrzeugfestem Schwenkantrieb 5 gezeigt, wobei die Wechseleinrichtung innerhalb des Lagergehäuses 30 ausgebildet ist. In dieser Ausführung ist das Steuerelement 41 des Steuergetriebes 4 um die Lagerachse 2, die gleichzeitig die Schwenkachse 7 darstellt, drehbar angeordnet, wobei der die Lagerachse 2 definierende Bolzen 79 eine radiale Bohrung aufweist, in der ein erster Sperrstift 60 von einer Feder 70 verschieblich beaufschlagt ist. Das Steuerelement 41 weist einen Fortsatz 76 auf, in dem eine Durchbrechung 62 ausgebildet ist, in die der Sperrstift 60 durch die Feder 70 eingedrückt ist (Fig. 25). In dieser Stellung ist das Steuerelement 41 fahrzeugfest gehalten, sodaß bei Verschwenkung des Lagergehäuses 30 über den am Gelenksbolzen 35 eingreifenden Schwenkantrieb das Steuergetriebe 4 für die Änderung der Wischerarmlänge und die Verdrehung des Wischerblattes 16 wirksam ist. Der Stellantrieb 19 ist auf dem Lagergehäuse 30 angeordnet und in dieser Ausführung insbesondere durch einen Elektromotor mit einer Gewindespindel 66 gebildet, die einen Schlitten 75 durchsetzt, der in einer Führung 74 verschiebbar ist. Am Schlitten 75 ist der Gewindebolzen 35 für den Eingriff des Schwenkantriebes 5 und ein zweiten Sperrstift 61 vorgesehen, der gemeinsam mit dem ersten Sperrstift 60 der Verriegelungseinrichtung 51 angehört. Wird der Stellantrieb 19 so betätigt, daß sich der Schlitten 75 in Richtung des in Fig. 26 gezeigten Pfeiles bewegt, so tritt in der mittleren Arbeitsstellung der zweite Sperrstift 61 in die Durchbrechung 62 des Fortsatzes 76 des Steuerelements 41 ein, und verdrängt den ersten Sperrstift 60. Dadurch wird das Steuerelement 41 wischerarmfest verriegelt (Fig. 26) und das Steuergetriebe außer Funktion gesetzt. Da damit der Angriffspunkt des Schwenkarmes zur Lagerachse 2 angenähert wird, wird der Schwenkwinkel vergrößert, sodaß der Wischerarm 29 in der Ruhestellung tiefer liegt als während der Wischbewegung und die Wischergeschwindigkeit beschleunigt ist. Der Schlitten 75 kann aus der Parallelführungstellung des Wischerblattes 16 nach Fig. 25 dank des Stellantriebes 19 auch von der Lagerachse 3 entfernt werden, wodurch sich eine Verringerung der Wischergeschwindigkeit und eine Verkleinerung des Wischerfeldes ergibt (Fig. 3). Dies kann insbesondere für hohe Fahrgeschwindigkeiten von Bedeutung sein, um die einwandfreie Funktion der Scheibenwischeranlage zu gewährleisten.
Fig. 29 zeigt eine Variante eines Lagergehäuses 30, bei dem die Schwenkachse 7 und die Lagerachse 2 nicht koaxial sondern mit Abstand zueinander angeordnet sind, wobei die Gewindespindel 66, ebenso wie in der Ausführung nach Fig. 25 bis 32 etwa unter 45 ^{o} zur Symmetrieebene des Wischerarmes 29 verläuft. Die Verschiebung des Gelenkbolzens 35 verändert wiederum die Lage des Lenkers 65 des Schwenkantriebes 5 und die Größe des Schwenkwinkels des Wischerarmes 29. Insbesondere aus der Fig. 29 ist ersichtlich, daß die Verschiebung des Gelenkbolzens 35 auch eine Verschiebung der mittleren Arbeitsstellung mit sich bringt, sodaß diese gemäß Fig. 3 trotz mittiger Anordnung der Scheibenwischeranlage ein asymmetrisches Wischerfeld erzeugt. Eine Verkleinerung des Wischwinkels durch Vergrößerung des Abstandes zwischen der Schwenkachse 7 und dem Angriffspunkt des Schwenkantriebs 5 am Lagergehäuse 30 läßt somit gemäß Fig. 3 fahrerseitig nur einen minimalen Randstreifen unberührt, während der unberührte Randstreifen auf der Beifahrerseite wesentlich größer ist. Diese Stellung kann wie erwähnt bei hoher Fahrgeschwindigkeit und starken Regen wichtig sein, wobei die Sicht des Beifahrers von untergeordneter Bedeutung ist.

## Patentansprüche

1. Scheibenwischeranlage, insbesondere für Personenkraftwagen, mit einem um eine Schwenkachse (7) schwenkbaren Wischerarm (29), der ein Lagergehäuse (30) und am freien Endteil (28) ein Drehlager (63) für ein im wesentlichen parallel zu den Seitenrändern der Scheibe (32) über die Scheibe (32) führbares Wischerblatt (16) aufweist, das sowohl in einer mittleren Arbeitsstellung als auch in einer in den Bereich des unteren Scheibenrandes verschwenkten Ruhestellung annähernd parallel zum Wischerarm (29) liegt, mit einem Schwenkantrieb (5) für den Wischerarm (29), mit einem im Lagergehäuse (30) angeordneten Steuergetriebe (4) für den Drehantrieb (50) des Wischerblattes (16) während der Parallelführung, wobei das Steuergetriebe (4) ein während der Parallelführung fahrzeugfest angeordnetes Steuerelement (41) sowie ein mit dem Wischerarm (29) schwenkendes Abtastelement (6) aufweist, und mit einer Einrichtung zum Wechsel zwischen paralleler und schwenkender Führung des Wischerblattes (16), die einen Stellantrieb (19) aufweist, mittels dem das Steuerelement (41) in der mittleren Arbeitsstellung aus der fahrzeugfesten Anordnung in eine wischerarmfeste Anordnung überführbar ist, in der das Steuergetriebe (4) außer Funktion gesetzt, der Drehantrieb (50) des Wischerblattes (16) arretiert und der Schwenkwinkel des Wischerarmes (29) verändert ist, dadurch gekennzeichnet, daß der Wischerarm (29) einen mit dem Lagergehäuse (3) verbundenen ersten Teil (27) und einen zweiten Teil (28) aufweist, an dem das Drehlager (63) für das Wischerblatt (16) vorgesehen ist und der während der Parallelführung des Wischerblattes (16) im ersten Teil (27) teleskopisch derart verschiebbar ist, daß das Drehlager (63) für das Wischerblatt (16) sich im wesentlichen parallel zum unteren Rand der Scheibe (32) bewegt und daß die Verschiebung des zweiten Teiles (28) ebenfalls von dem den Drehantrieb (50) des Wischerblattes (16) steuernden Steuergetriebe (4) gesteuert und in der wischerarmfesten Anordnung des Steuerelementes (41) blockiert ist.

2. Scheibenwischeranlage nach Anspruch 1, dadurch gekennzeichnet, daß im Steuerelement (41) ein von der Verschiebekraft des zweiten Teiles (28) des Wischerarmes (29) beaufschlagter Steuerstift (40) verschiebbar gelagert ist, und das Abtastelement (6) durch eine im Lagergehäuse (30) ausgebildete Steuerkurve (42) ausgebildet ist, an der der Steuerstift (40) anliegt.

3. Scheibenwischeranlage nach Anspruch 1 oder 2, dadurch gekennzeichnet, daß der teleskopisch verschiebbare zweite Teil (28) des Wischerarmes (29) gegen die Kraft einer Schraubenfeder (37) einziehbar ist.

4. Scheibenwischeranlage nach einem der Ansprüche 1 bis 3, dadurch gekennzeichnet, daß die Parallelführung des Wischerblattes (16) einen Seilzug (8) umfaßt, der einerseits mit einer das Wischerblatt (16) tragenden Drehscheibe (17) verbunden und andererseits auf Seilspulen (9, 10) ausziehbar aufgewickelt ist, die am Steuerelement (41) über eine Verzahnung (14, 15) gegenläufig drehbar gelagert sind.

5. Scheibenwischeranlage nach Anspruch 2 und 4, dadurch gekennzeichnet, daß der Steuerstift (40) mit einer Verzahnung (31) versehen ist, die in ein die Seilspulen (9, 10) gegenläufig drehendes Getriebe (11) eingreift.

6. Scheibenwischeranlage nach Anspruch 5, dadurch gekennzeichnet, daß die Drehscheibe (17) des Wischerblattes (16) eine Verzahnung (67) aufweist, in die eine vom Seilzug (8) getriebene Antriebsschnecke (68) eingreift, deren Stillstand die Verdrehung des Wischerblattes (16) sperrt.

7. Scheibenwischeranlage nach einem der Ansprüche 1 bis 6, dadurch gekennzeichnet, daß in dem an das Lagergehäuse (30) anschließenden Teil (27) des Wischerarmes (29) eine Querachse (22) an der vom Wischerblatt (16) abgewandten Seite des Seilzuges (8) vorgesehen ist, auf der der restliche Teil des Wischerarmes (29) schwenkbar gelagert ist.

8. Scheibenwischeranlage nach einem der Ansprüche 1 bis 7, wobei der Schwenkantrieb (5) fahrzeugfest und mit Abstand zur Schwenkachse (7) an einem Gelenkbolzen (35) des Lagergehäuses (30) angreift, das um eine zur Schwenkachse (7) parallele Lagerachse (2) schwenkbar ist, dadurch gekennzeichnet, daß die Schwenkachse (7) des Wischerarmes (29) auf dem Steuerelement (41) angeordnet ist, und daß der Abstand des Gelenkbolzens (35) zur Lagerachse (2) kleiner als der Abstand des Gelenkbolzens (35) zur Schwenkachse (7) ist.

9. Scheibenwischeranlage nach Anspruch 1 oder 8 mit einer vom Stellantrieb (19) beaufschlagten Verriegelungseinrichtung (51), die einen in eine Öffnung (53) eines fahrzeugfesten Bauteiles oder eine Öffnung (54) des Lagergehäuses (39) eingeschobenen Sperrstift (52) aufweist, wobei der Sperrstift (52) während der Parallelführung dem fahrzeugfesten Steuerelement (41) zugeordnet ist, dadurch gekennzeichnet, daß der Sperrstift (52) parallel zur Schwenkachse (7) bzw. Lagerachse (2) verschiebbar ist.

10. Scheibenwischeranlage nach Anspruch 1 oder 8 mit einer vom Stellantrieb (19) beaufschlagten Verriegelungseinrichtung (51) für die Überführung des Steuerelementes (41) zwischen der fahrzeugfesten und der wischerarmfesten Anordnung, dadurch gekennzeichnet, daß der Stellantrieb (19) auf dem Lagergehäuse (30) angeordnet ist und die Verriegelungseinrichtung (51) zwei senkrecht zur Schwenkachse (7) bzw. Lagerachse (2) verschiebbare Sperrstifte (60,61) umfaßt, deren erster (60) in der Schwenkachse (7) bzw. Lagerachse (2) federbeaufschlagt angeordnet ist und deren zweiter (61) im Lagergehäuse (30) verschiebbar ist, wobei das Steuerelement (41) eine Durchbrechung (62) aufweist, in die die beiden Sperrstifte (60,61) wechselweise eingreifen.

11. Scheibenwischeranlage nach Anspruch 10, dadurch gekennzeichnet, daß der zweite Sperrstift (61) einen aus dem Lagergehäuse (30) vorstehenden Gelenksbolzen (35) aufweist, an dem der Schwenkantrieb 85) angelenkt ist.

## Claims

1. A windscreen wiper arrangement, in particular for motor cars, comprising a wiper arm (29) which is pivotable about a pivot axis (7) and which has a bearing housing (30) and at the free end portion (28) a rotary bearing (63) for a wiper blade (16) which can be moved over the windscreen (32) substantially parallel to the side edges of the windscreen (32) and which lies approximately parallel to the wiper arm (29) both in a central operating position and also in a rest position in which it is pivoted into the region of the lower edge of the windscreen, a pivotal drive (5) for the wiper arm (29), a control transmission (4) arranged in the bearing housing (30) for the rotary drive (50) of the wiper blade (16) during the parallel movement, wherein the control transmission (4) has a control element (41) which is arranged fixedly with respect to the vehicle during the parallel movement and a sensing element (6) which pivots with the wiper arm (29), and a device for changing between parallel and pivoting movement of the wiper blade (16), which device has a setting drive (19) by means of which the control element (41) can be transferred in the central operating position from the arrangement of being fixed with respect to the vehicle to an arrangement of being fixed with respect to the wiper arm in which the control transmission (4) is put out of operation, the rotary drive (50) of the wiper blade (16) is arrested and the pivot angle of the wiper arm (29) is altered, characterised in that the wiper arm (29) has a first portion (27) connected to the bearing housing (30) and a second portion (28) on which the rotary bearing (63) for the wiper blade (16) is provided and which is telescopically displaceable in the first portion (27) during the parallel movement of the wiper blade (16) in such a way that the rotary bearing (63) for the wiper blade (16) moves substantially parallel to the lower edge of the windscreen (32) and that the displacement of the second portion (28) is also controlled by the control transmission (4) for controlling the rotary drive (50) of the wiper blade (16) and is locked in the arrangement of the control element (41) of being fixed with respect to the wiper arm.

2. A windscreen wiper arrangement according to claim 1 characterised in that a control pin (40) which is acted upon by the displacement force of the second portion (28) of the wiper arm (29) is displaceably mounted in the control element (41) and the sensing element (6) is provided by a control cam (42) which is formed in the bearing housing (30) and against which the control pin (40) bears.

3. A windscreen wiper arrangement according to claim 1 or claim 2 characterised in that the telescopically displaceable second portion (28) of the wiper arm (29) can be pulled in against the force of a coil spring (37).

4. A windscreen wiper arrangement according to one of claims 1 to 3 characterised in that the parallel guide means for the wiper blade (16) includes a cable (8) which on the one hand is connected to a rotary disc (17) carrying the wiper blade (16) and on the other hand is extendably wound onto cable reels (9, 10) which are mounted on the control element (41) rotatably in opposite relationship by way of a tooth arrangement (14, 15).

5. A windscreen wiper arrangement according to claims 2 and 4 characterised in that the control pin (40) is provided with a tooth arrangement (31) engaging into a transmission (11) for rotating the cable reels (9, 10) in opposite relationship.

6. A windscreen wiper arrangement according to claim 5 characterised in that the rotary disc (17) of the wiper blade (16) has a tooth arrangement (67) into which engages a drive worm (68) which is driven by the cable (8) and the stoppage of which blocks the rotary movement of the wiper blade (16).

7. A windscreen wiper arrangement according to one of claims 1 to 6 characterised in that provided in the portion (27) of the wiper arm (29), which adjoins the bearing housing (30) is a transverse axis (22) at the side of the cable (8) which is away from the wiper blade (16), on which the remaining portion of the wiper arm (29) is pivotably mounted.

8. A windscreen wiper arrangement according to one of claims 1 to 7 wherein the pivotal drive (5) is fixed with respect to the vehicle and at a spacing relative to the pivot axis (7) engages a pivot pin (35) of the bearing housing (30), which is pivotable about a bearing axis (2) parallel to the pivot axis (7), characterised in that the pivot axis (7) of the wiper arm (29) is arranged on the control element (41) and that the spacing of the pivot pin (35) relative to the bearing axis (2) is smaller than the spacing of the pivot pin (35) relative to the pivot axis (7).

9. A windscreen wiper arrangement according to claim 1 or claim 8 with a locking device (51) which is acted upon by the setting drive (19) and which has a locking pin (52) which can be pushed into an opening (53) in a component which is fixed with respect to the vehicle or an opening (54) in the bearing housing (39), wherein the locking pin (52) is associated with the control element (41) which is fixed with respect to the vehicle, during the parallel movement, characterised in that the locking pin (52) is displaceable parallel to the pivot axis (7) or the bearing axis (2).

10. A windscreen wiper arrangement according to claim 1 or claim 8 having a locking device (51) which is acted upon by the setting drive (19), for transfer of the control element (41) between the arrangement of being fixed with respect to the vehicle and the arrangement of being fixed with respect to the wiper arm, characterised in that the setting drive (19) is arranged on the bearing housing (30) and the locking device (51) includes two locking pins (60, 61) which are displaceable perpendicularly to the pivot axis (7) or the bearing axis (2) and of which the first (60) is arranged spring-loaded on the pivot axis (7) or the bearing axis (2) and the second (61) is displaceable in the bearing housing (30), wherein the control element (41) has an opening (62) into which the two locking pins (60, 61) alternately engage.

11. A windscreen wiper arrangement according to claim 10 characterised in that the second locking pin (61) has a pivot pin (35) which projects out of the bearing housing (30) and to which the pivotal drive (5) is pivotably connected.

## Revendications

1. Système d'essuie-glace, en particulier pour voitures particulières, comprenant un bras d'essuie-glace (29) qui peut pivoter autour d'un axe de pivotement (7) et présente un boîtier de montage (30) et sur la partie terminale libre (28) un palier de rotation (63) pour un balai d'essuie-glace (16) qui peut être guidé le long du pare-brise (32), sensiblement parallèlement aux bords latéraux du pare-brise (32) et est approximativement parallèle au bras d'essuie-glace (29) aussi bien dans une position de travail médiane que dans une position de repos où il a pivoté dans la région du bord inférieur de pare-brise, comprenant pour le bras d'essuie-glace (29) un dispositif d'entraînement en pivotement (5), comprenant un mécanisme de commande (4) disposé dans le boîtier de montage (30) et destiné au dispositif d'entraînement en rotation (50) du balai d'essuie-glace (16) pendant le guidage parallèle, le mécanisme de commande (4) présentant un élément de commande (41) monté solidaire du véhicule pendant le guidage parallèle ainsi qu'un élément de palpation (6) pivotant avec le bras d'essuie-glace (29), et comprenant pour alterner entre un guidage parallèle et un guidage pivotant du balai d'essuie-glace (16), un dispositif qui présente un actionneur réglant (19) au moyen duquel l'élément de commande (41) dans la position de travail médiane peut être transféré de la disposition solidaire du véhicule dans un agencement solidaire du bras d'essuie-glace dans lequel le mécanisme de commande (4) est mis hors service, le dispositif d'entraînement en rotation (50) du balai d'essuie-glace (16) est arrêté et l'angle de pivotement du bras d'essuie-glace (29) est modifié, caractérisé par le fait que le bras d'essuie-glace (29) présente une première partie (27) reliée au boîtier de montage (30) et une deuxième partie (28) sur laquelle est prévu le palier de rotation (63) pour le balai d'essuie-glace (16) et qui peut coulisser télescopiquement dans la première partie (27) pendant le guidage parallèle du balai d'essuie-glace (16) de telle manière que le palier de rotation (63) pour le balai d'essuie-glace (16) se déplace sensiblement parallèlement au bord inférieur du pare-brise (32) et que le déplacement de la deuxième partie (28) est également commandé par le mécanisme de commande (4) qui commande le dispositif d'entraînement en rotation (50) du balai d'essuie-glace (16) et est bloqué lorsque l'élément de commande (41) est solidaire du bras d'essuie-glace.

2. Système d'essuie-glace selon la revendication 1, caractérisé par le fait qu'un coulisseau de commande (40), sollicité par la force de déplacement de la deuxième partie (28) du bras d'essuie-glace (29), est monté mobile dans l'élément de commande (41) et l'élément de palpation (6) est réalisé par une came de commande (42) qui est réalisée dans le boîtier de commande (30) et contre laquelle prend appui le coulisseau de commande (40).

3. Système d'essuie-glace selon la revendication 1 ou 2, caractérisé par le fait que la deuxième partie (28), pouvant coulisser télescopiquement, du bras d'essuie-glace (29) peut se rétracter contre la force d'un ressort à boudin (37).

4. Système d'essuie-glace selon l'une des revendications 1 à 3, caractérisé par le fait que le guidage parallèle du balai d'essuie-glace (16) comprend une commande par câble (8) qui est d'une part reliée à un disque tournant (17) portant le balai d'essuie-glace (16) et est d'autre part enroulée avec possibilité de déroulement sur des bobines de câble (9, 10) qui sont montées rotatives en sens inverse sur l'élément de commande (41) par l'intermédiaire d'une denture (14, 15).

5. Système d'essuie-glace selon les revendications 2 et 4, caractérisé par le fait que le coulisseau de commande (40) est muni d'une denture (31) qui engrène avec un engrenage (11) faisant tourner les bobines de câbles (9, 10) en sens inverse.

6. Système d'essuie-glace selon la revendication 5, caractérisé par le fait le disque tournant (17) du balai d'essuie-glace (16) présente une denture (67) dans laquelle engrène une vis d'entraînement (68) entraînée par le câble de commande (8) et dont l'arrêt bloque la rotation du balai d'essuie-glace (16).

7. Système d'essuie-glace selon l'une des revendications 1 à 6, caractérisé par le fait que dans la partie (27) du bras d'essuie-glace (29) qui fait suite au boîtier de montage (30), est prévu un axe transversal (22) sur le côté de la commande par câble (8) éloigné du balai d'essuie-glace (16), axe sur lequel la partie restante du bras d'essuie-glace (29) est montée pivotante.

8. Système d'essuie-glace selon l'une des revendications 1 à 7, le dispositif d'entraînement en pivotement (5) étant solidaire du véhicule et agissant à distance de l'axe de pivotement (7) sur un axe d'articulation (35) du boîtier de montage (30) qui peut pivoter autour d'un axe de montage (2) parallèle à l'axe de pivotement (7), caractérisé par le fait que l'axe de pivotement (7) du bras d'essuie-glace (29) est disposé sur l'élément de commande (41) et que l'écartement de l'axe d'articulation (35) par rapport à l'axe de montage (2) est inférieur à l'écartement de l'axe d'articulation (35) par rapport à l'axe de pivotement (7).

9. Système d'essuie-glace selon la revendication 1 ou 8, comprenant un dispositif de verrouillage (51) qui est sollicité par l'actionneur réglant (19) et présente une broche d'arrêt (52) engagée dans un orifice (53) d'un élément solidaire du véhicule ou dans un orifice (54) du boîtier de montage (30), la broche d'arrêt (52) étant associée à l'élément de commande (41) solidaire du véhicule pendant le guidage parallèle, caractérisé par le fait que la broche d'arrêt (52) peut être déplacée parallèlement à l'axe de pivotement (7) et à l'axe de montage (2).

10. Système d'essuie-glace selon la revendication 1 ou 8, comprenant un dispositif de verrouillage (51) sollicité par l'actionneur réglant (19) pour transférer l'élément de commande (41) de la disposition solidaire du véhicule dans l'agencement solidaire du bras d'essuie-glace, caractérisé par le fait que l'actionneur réglant (19) est disposé sur le boîtier de montage (30) et le dispositif de verrouillage (51) comprend deux broches d'arrêt (60, 61) qui peuvent être déplacées perpendiculairement à l'axe de pivotement (7) et à l'axe de montage (2) et dont la première (60) est disposée, en étant sollicitée par ressort, dans l'axe de pivotement (7) et dans l'axe de montage (2) et la deuxième (61) peut être déplacée dans le boîtier de montage (30), l'élément de commande (41) présentant une découpe (62) dans laquelle les deux broches d'arrêt (60, 61) s'engagent alternativement.

11. Système d'essuie-glace selon la revendication 10, caractérisé par le fait que la deuxième broche d'arrêt (61) présente un axe d'articulation (35) qui fait saillie hors du boîtier de montage (30) et sur lequel le dispositif d'entraînement en pivotement (5) est articulé.
